# EUROPÄISCHE PATENTSCHRIFT

(11) **EP 3 326 748 B1**
(45) Veröffentlichungstag und Bekanntmachung des Hinweises auf die Patenterteilung: **01.01.2020**
(21) Anmeldenummer: 16201260.3
(22) Anmeldetag: 29.11.2016
(51) Int. Cl.: B23Q 3/06, B23C 3/18, B23P 15/02

(54) **VERFAHREN ZUM SPANABHEBENDEN BEARBEITEN VON TURBINENSCHAUFELN UND WERKZEUGMASCHINE ZUM DURCHFÜHREN EINES SOLCHEN VERFAHREN.**
METHOD FOR MATERIAL REMOVING MACHINING OF A TURBINE BLADE AND MACHINE TOOL FOR CARRYING OUT SUCH A METHOD
PROCÉDÉ D'USINAGE PAR ENLÈVEMENT DE COPEAUX D'AUBES DE TURBINE ET MACHINE-OUTIL POUR LA RÉALISATION DE CE PROCÉDÉ.

(43) Veröffentlichungstag der Anmeldung: 30.05.2018
(73) Patentinhaber: GF Machining Solutions AG, 3550 Langnau im Emmental (CH)
(72) Erfinder: Starek, Martin, 3075 Rüfenacht (CH)
(74) Vertreter: Fenner, Seraina

(56) Entgegenhaltungen:
- EP-B1- 2 618 961
- CH-A5- 686 878

## Beschreibung

Die Erfindung betrifft ein Verfahren zum spanabhebenden Bearbeiten von Turbinenschaufeln auf einer mehrachsigen Werkzeugmaschine, wobei die Turbinenschaufel durch eine rotierbare Schaufelfuss-Spannvorrichtung und eine rotierbare Schaufelspitzen-Spannvorrichtung gehalten und durch ein in einer Werkzeugspindel eingespanntes Werkzeug bearbeitet wird.

Bei derartigen Verfahren ist die durch Schnittkräfte verursachte elastische Durchbiegung der Turbinenschaufel ein bekanntes Problem. Diese Durchbiegung beeinträchtigt die Genauigkeit der Bearbeitung und kann zu Schwingungen in der Turbinenschaufel führen, wodurch die Oberflächengüte in den bearbeiteten Profilabschnitten verschlechtert wird.

Aus dem Dokument EP2618961B1 ist eine Lösung des oben genannten Problems bekannt, bei der die Turbinenschaufel während der Bearbeitung abschnittsweise durch eine längs der Schaufelachse verfahrbare Lünette gestützt wird. Diese weist eine Anzahl von längs ihrer Achse bewegbaren Stösseln auf, die gegen die Turbinenschaufel gepresst werden, um diese zu stützen. Diese Lünette erfordert relativ viel Raum rund um die Turbinenschaufel, benötigt zusätzliche Antriebe, beeinträchtigt die Zugänglichkeit zur Turbinenschaufel und kann den Spänefall behindern. Ausserdem muss die Lünette bei einem Wechsel des zu bearbeitenden Profilabschnitts durch das Werkzeug umfahren werden, was einen erheblichen Programmieraufwand bedingt und trotzdem eine gewisse Kollisionsgefahr beinhaltet. Ausserdem kann die fertig bearbeitete Schaufelfläche durch die Stössel beschädigt werden, beispielsweise indem diese Eindrücke hinterlassen.

Die Dokumente CH693610A5 und WO2015/157166A1 zeigen Vorrichtungen mit an das Schaufelprofil angepassten Spannbacken, jedoch muss dort das Werkstück umgespannt werden, um alle Profilabschnitte bearbeiten zu können.

Ausgehend von diesem Stand der Technik liegt der Erfindung die Aufgabe zugrunde, ein Verfahren zum spanabhebenden Bearbeiten von Turbinenschaufeln vorzuschlagen, bei dem die Turbinenschaufel in einer einzigen Einspannung bearbeitet wird, wobei im Bereich der Schaufelspitze die Einspannung derart ist, dass eine Durchbiegung der Turbinenschaufel infolge von Schnittkräften reduziert und Schwingungen gedämpft werden.

Diese Aufgabe wird erfindungsgemäss dadurch gelöst, dass zunächst ein erster Profilabschnitt benachbart zur Schaufelspitze durch das Werkzeug bearbeitet wird, dass danach das Werkzeug abgelegt wird und die Werkzeugspindel eine zusätzliche Spannvorrichtung ergreift, die an den ersten Profilabschnitt angepasste Klemmbacken aufweist, dass die zusätzliche Spannvorrichtung an der Schaufelspitzen-Klemmvorrichtung positioniert wird, derart, dass die Klemmbacken im ersten Profilabschnitt aufliegen, dass die Werkzeugspindel ein Werkzeug ergreift und damit den verbleibenden Profilabschnitt bearbeitet.

Diese erfindungsgemässe Ausgestaltung des Verfahrens hat folgende Vorteile. Der Raum zwischen der Schaufelfuss-Spannvorrichtung und der zusätzlichen Spannvorrichtung bleibt während der Bearbeitung des verbleibenden Profilabschnitts frei, so dass die Turbinenschaufel für das Werkzeug zugänglich bleibt und die Späne frei nach unten fallen können. Durch diese Zugänglichkeit besteht keine Kollisionsgefahr für das Werkzeug und die Programmierung der Bearbeitung wird gegenüber dem bekannten Stand der Technik einfacher. Ferner benötigt die Werkzeugmaschine keine zusätzliche Achse für die Handhabung der zusätzlichen Spannvorrichtung und schliesslich wird durch die angepassten Klemmbacken die Oberfläche des Schaufelprofils geschont.

Besondere Ausführungsarten der Erfindung sind in den abhängigen Ansprüchen umschrieben.

Ausführungsbeispiele der Erfindung werden nachstehend unter Bezugnahme auf die angefügten Zeichnungen erläutert. Es zeigen
- Figur 1: eine perspektivische Ansicht auf den Bereich der Schaufelspitzen-Spannvorrichtung einer Werkzeugmaschine nach dem Bearbeiten eines ersten Profilabschnitts und
- Figur 2: eine Ansicht entsprechend Figur 1 nach dem Anbringen der zusätzlichen Spannvorrichtung.

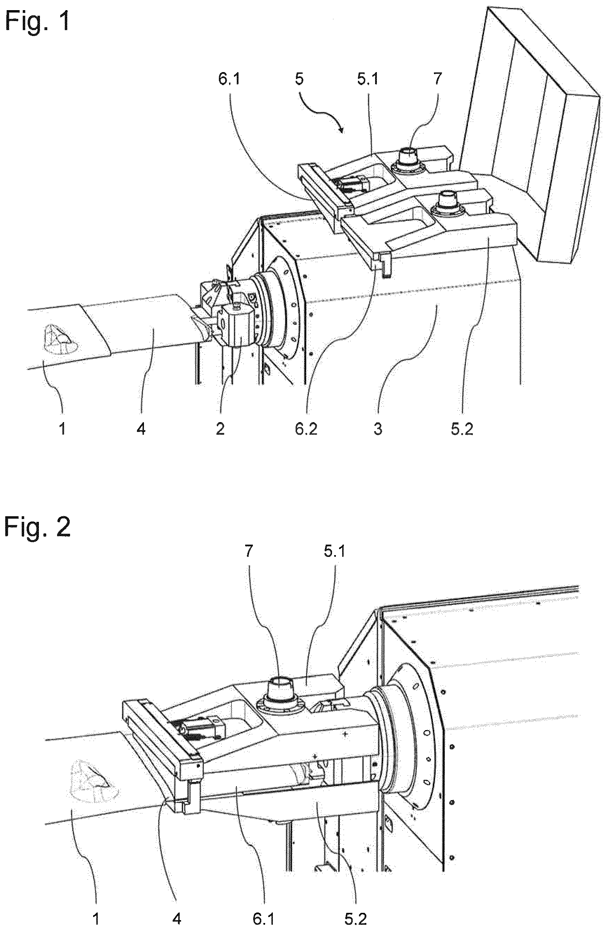

Die beiden Zeichnungsfiguren zeigen in perspektivischen Ansichten einen Bereich einer Werkzeugmaschine während der Bearbeitung einer Turbinenschaufel 1, mit einer rotierend antreibbaren Schaufelspitzen Spannvorrichtung 2. Die Achse und der Antrieb dieser Schaufelspitzen-Spannvorrichtung 2 sind in einem Gehäuse 3 untergebracht. Eine der Schaufelspitzen Spannvorrichtung 2 gegenüberliegende Schaufelfuss-Spannvorrichtung und eine in einem Winkel zur Längsachse der Turbinenschaufel 1 ausgerichtete Werkzeugachse ist vorhanden aber in den Figuren nicht dargestellt. In Figur 1 ist angedeutet, dass ein erster Profilabschnitt 4 benachbart zur Schaufelspitze durch das Werkzeug bereits bearbeitet ist. Diese Bearbeitung muss nicht unbedingt eine Fertigbearbeitung sein. Wichtig ist nur, dass der Profilabschnitt eine definierte, stabile Anlagefläche für die nachstehend erwähnten Klemmbacken bietet.

Eine zusätzliche, aus zwei Teilen 5.1 und 5.2 bestehende Spannvorrichtung 5 zur Stabilisierung des genannten ersten Profilabschnitts 4 ist in der Darstellung nach Figur 1 zur späteren Verwendung auf dem Gehäuse 3 gelagert. Jeder Teil 5.1, 5.2 der zusätzlichen Spannvorrichtung 5 ist mit einer Klemmbacke 6.1, 6.2 ausgestattet, deren Klemmfläche dem bereits bearbeiteten ersten Profilabschnitt 4 angepasst ist. Die Klemmbacken 6.1 und 6.2 müssen nicht vollflächig am Abschnitt 4 anliegen, sondern können unterbrochene Kontaktabschnitte haben. Jeder Teil 5.1, 5.2 der zusätzlichen Spannvorrichtung 5 weist ausserdem einen nach oben ragenden Manipulierbolzen 7 auf, der durch die Werkzeugspindel erfasst werden kann, nachdem das zuvor in dieser eingespannte Werkzeug, beispielsweise ein Fräser, beispielsweise in einem Werkzeugmagazin abgelegt wurde.

In der Darstellung gemäss Figur 2 sind die beiden Teile 5.1 und 5.2 der zusätzlichen Spannvorrichtung 5 durch die Werkzeugspindel in ihre Position an der Schaufelspitze gebracht und festgespannt worden. Dabei wurde zuerst der erste Teil 5.1 durch die Werkzeugspindel an seinem Manipulierbolzen 7 ergriffen und mittels eines Nullpunkt-Spannsystems beispielsweise auf der Saugseite der Turbinenschaufel 1 an der Schaufelspitzen-Spannvorrichtung 2 fixiert und danach die Turbinenschaufel um 180 Grad gedreht. Danach wurde der zweite Teil 5.2 durch die Werkzeugspindel in gleicher Weise auf der Druckseite der Turbinenschaufel fixiert. Die Manipulierbolzen 7 sind hohl und ermöglichen die Betätigung der zusätzlichen Spannvorrichtung 5 durch ein z.B. durch die Werkzeugspindel zugeführtes Druckfluid, beispielsweise Druckluft. Dabei wird die zusätzliche Spannvorrichtung 5 unter Druck gelöst und klemmt, wenn sie drucklos ist.

Verglichen mit dem aus dem eingangs genannten Dokument EP2618961B1 bekannten Stand der Technik kommt das vorangehend beschriebene Verfahren mit wesentlich geringeren Kosten und praktisch ohne Unterhalt aus. Auch die Programmierung ist weniger komplex und erlaubt eine feste, vollautomatische Positionierung des Werkzeugs ohne Kollisionsgefahr, auch bei variabler Rohlingsgrösse.

### Bezugszeichenliste

- 1: Turbinenschaufel
- 2: Schaufelspitzen Spannvorrichtung
- 3: Gehäuse
- 4: erster Profilabschnitt
- 5: zusätzliche Spannvorrichtung
- 5.1: Teil der zusätzlichen Spannvorrichtung 5
- 5.2: Teil der zusätzlichen Spannvorrichtung 5
- 6.1: Klemmbacke
- 6.2: Klemmbacke
- 7: Manipulierbolzen

## Patentansprüche

1. Verfahren zum spanabhebenden Bearbeiten von Turbinenschaufeln (1) auf einer mehrachsigen Werkzeugmaschine, wobei die Turbinenschaufel (1) durch eine rotierbare Schaufelfuss-Spannvorrichtung und eine rotierbare Schaufelspitzen-Spannvorrichtung (2) gehalten und durch ein in einer Werkzeugspindel eingespanntes Werkzeug bearbeitet wird, **dadurch gekennzeichnet, dass** zunächst ein erster Profilabschnitt (4) benachbart zur Schaufelspitze durch das Werkzeug bearbeitet wird, dass danach das Werkzeug abgelegt wird und die Werkzeugspindel eine zusätzliche Spannvorrichtung (5) ergreift, die an den ersten Profilabschnitt (4) angepasste Klemmbacken (6.1, 6.2) aufweist, dass die zusätzliche Spannvorrichtung (5) an der Schaufelspitzen-Klemmvorrichtung (2) positioniert wird, derart, dass die Klemmbacken (6.1, 6.2) im ersten Profilabschnitt (4) aufliegen, dass die Werkzeugspindel ein Werkzeug ergreift und damit den verbleibenden Profilabschnitt bearbeitet.

2. Verfahren nach Anspruch 1, **dadurch gekennzeichnet, dass** die zusätzliche Spannvorrichtung (5) mittels eines Nullpunkt-Spannsystems an der Schaufelspitzen-Klemmvorrichtung (2) befestigt wird.

3. Verfahren nach einem der vorangehenden Ansprüche, **dadurch gekennzeichnet, dass** die Klemmbacken (6.1, 6.2) auswechselbar in der zusätzlichen Spannvorrichtung (5) angeordnet sind.

4. Verfahren nach einem der vorangehenden Ansprüche, **dadurch gekennzeichnet, dass** die zusätzliche Spannvorrichtung aus zwei Teilen (5.1, 5.2) besteht, von denen jeder eine Klemmbacke (6.1, 6.2) aufweist.

5. Verfahren nach Anspruch 4, **dadurch gekennzeichnet, dass** zunächst der erste Teil (5.1) der zusätzlichen Spannvorrichtung (5) auf der Saugseite oder der Druckseite des bearbeiteten Profilabschnitts (4) angebracht wird, dass die Turbinenschaufel (1) um 180 Grad gedreht wird und dann der zweite Teil (5.2) der zusätzlichen Spannvorrichtung (5) auf der Druckseite beziehungsweise der Saugseite des bearbeiteten Profilabschnitts (4) angebracht wird.

6. Verfahren nach Anspruch 5, **dadurch gekennzeichnet, dass** an jedem Teil (5.1, 5.2) der zusätzlichen Spannvorrichtung (5) ein Manipulierbolzen (7) zum Ergreifen des Teils (5.1, 5.2) durch die Werkzeugspindel angeordnet ist.

7. Verfahren nach Anspruch 6, **dadurch gekennzeichnet, dass** der Manipulierbolzen (7) hohl ist.

8. Verfahren nach Anspruch 7, **dadurch gekennzeichnet, dass** die zusätzliche Spannvorrichtung (5) mittels eines durch die Werkzeugspindel zugeführten Druckfluids gespannt oder entspannt wird.

9. Werkzeugmaschine zum Durchführen vom Verfahren nach Anspruch 1, wobei die Werkzeugmaschine eine rotierbare Schaufelfuss-Spannvorrichtung und eine rotierbare Schaufelspitzen-Spannvorrichtung (2) zum Halten einer Turbinenschaufel (1) besitzt, wobei die Werkzeugmaschine im weiteren eine Werkzeugspindel aufweist zum Einspannen eines Werkzeugs, **dadurch gekennzeichnet, dass**
die Werkzeugmaschine eine zusätzliche Spannvorrichtung (5) besitzt, welche aus zwei Teilen (5.1, 5.2) besteht, die mit je einer oder mehrerer Klemmbacken (6.1, 6.2) ausgestattet sind, wobei die zusätzliche Spannvorrichtung (5) an der Schaufelspitzen-Spannvorrichtung (2) befestigt werden kann, vorzugsweise mittels eines Nullpunkt-Spannsystems.

10. Werkzeugmaschine gemäss Anspruch 9, **dadurch gekennzeichnet, dass** an jedem Teil (5.1, 5.2) der zusätzlichen Spannvorrichtung (5) ein Manipulierbolzen (7) zum Ergreifen des Teils (5.1, 5.2) vorgesehen ist.

11. Werkzeugmaschine gemäss Anspruch 9 oder 10, **dadurch gekennzeichnet, dass** die zusätzliche Spannvorrichtung (5) mittels eines durch die Werkzeugspindel zugeführten Druckfluids gespannt oder entspannt wird.

## Claims

1. Method for cutting machining of turbine blades (1) on a multi-axis machine tool, wherein the turbine blade (1) is held by a rotatable blade-root clamping device and a rotatable blade-tip clamping device (2) and is machined by means of a tool which is chucked in a tool spindle, **characterised in that** a first profile section (4) which is adjacent to the blade tip is first of all machined by the tool, **in that** the tool is then removed and the tool spindle grabs an additional clamping device (5) which has clamping jaws (6.1, 6.2) adapted to the first profile section (4), **in that** the additional clamping device (5) is positioned on the blade-tip clamping device (2) in such a way that the clamping jaws (6.1, 6.2) rest in the first profile section (4), **in that** the tool spindle grabs a tool and machines the remaining profile section with it.

2. Method according to Claim 1, **characterised in that** the additional clamping device (5) is fastened on the blade-tip clamping device (2) by means of a zero-point clamping system.

3. Method according to one of the preceding claims, **characterised in that** the clamping jaws (6.1, 6.2) are arranged in the additional clamping device (5) in an exchangeable manner.

4. Method according to one of the preceding claims, **characterised in that** the additional clamping device consists of two parts (5.1, 5.2), of which each has a clamping jaw (6.1, 6.2).

5. Method according to Claim 4, **characterised in that** the first part (5.1) of the additional clamping device (5) is first of all attached on the suction side or the pressure side of the machined profile section (4), **in that** the turbine blade (1) is rotated by 180 degrees and then the second part (5.2) of the additional clamping device (5) is attached on the pressure side or the suction side of the machined profile section (4).

6. Method according to Claim 5, **characterised in that** a manipulating pin (7) is arranged on each part (5.1, 5.2) of the additional clamping device (5) for grabbing the part (5.1, 5.2) by means of the tool spindle.

7. Method according to Claim 6, **characterised in that** the manipulating pin (7) is hollow.

8. Method according to Claim 7, **characterised in that** the additional clamping device (5) is clamped or released by means of a pressurised fluid which is fed through the tool spindle.

9. Machine tool for carrying out the method according to Claim 1, wherein the machine tool has a rotatable blade-root clamping device and a rotatable blade-tip clamping device (2) for holding a turbine blade (1), wherein the machine tool furthermore has a tool spindle for the chucking of a tool, **characterised in that** the machine tool has an additional clamping device (5) which consists of two parts (5.1, 5.2) which in each case are equipped with one or more clamping jaws (6.1, 6.2), wherein the additional clamping device (5) can be fastened on the blade-tip clamping device (2), preferably by means of a zero-point clamping system.

10. Machine tool according to Claim 9, **characterised in that** a manipulating pin (7) is provided on each part (5.1, 5.2) of the additional clamping device (5) for grabbing the part (5.1, 5.2).

11. Machine tool according to Claim 9 or 10, **characterised in that** the additional clamping device (5) is clamped or released by means of a pressurised fluid which is fed through the tool spindle.

## Revendications

1. Procédé d'usinage, par enlèvement de copeaux, d'aubes de turbine (1) sur une machine-outil à plusieurs axes, l'aube de turbine (1) étant maintenue par un dispositif de serrage de pied d'aube rotatif et par un dispositif de serrage d'extrémité d'aube rotatif (2) et étant usinée par un outil serré dans une broche d'outil, **caractérisé en ce qu'**une première partie profilée (4), adjacente à la pointe d'aube, est tout d'abord usinée par l'outil, **en ce que** l'outil est ensuite retiré et la broche d'outil saisit un dispositif de serrage supplémentaire (5) qui comporte des mâchoires de serrage (6.1, 6.2) adaptées à la première partie profilée (4), **en ce que** le dispositif de serrage supplémentaire (5) est positionné sur le dispositif de serrage de pointe d'aube (2) de telle sorte que les mâchoires de serrage (6.1, 6.2) viennent en appui dans la première partie profilée (4) et que la broche d'outil saisisse un outil et usine ainsi la partie profilée restante.

2. Procédé selon la revendication 1, **caractérisé en ce que** le dispositif de serrage supplémentaire (5) est fixé au dispositif de serrage de pointe d'aube (2) à l'aide d'un système de serrage point zéro.

3. Procédé selon l'une des revendications précédentes, **caractérisé en ce que** les mâchoires de serrage (6.1, 6.2) sont disposées de manière interchangeable dans le dispositif de serrage supplémentaire (5).

4. Procédé selon l'une des revendications précédentes, **caractérisé en ce que** le dispositif de serrage supplémentaire comprend deux parties (5.1, 5.2) qui comportent chacune une mâchoire de serrage (6.1, 6.2).

5. Procédé selon la revendication 4, **caractérisé en ce que** la première partie (5.1) du dispositif de serrage supplémentaire (5) est montée du côté aspiration ou du côté sous pression de la partie profilée usinée (4), **en ce que** l'aube de turbine (1) est tournée de 180 degrés, puis la deuxième partie (5.2) du dispositif de serrage supplémentaire (5) est montée du côté sous pression ou du côté aspiration de la partie profilée usinée (4).

6. Procédé selon la revendication 5, **caractérisé en ce qu'**un boulon de manipulation (7) destiné à saisir la pièce (5.1, 5.2) par le biais de la broche de l'outil est disposé au niveau de chaque partie (5.1, 5.2) du dispositif de serrage supplémentaire (5).

7. Procédé selon la revendication 6, **caractérisé en ce que** le boulon de manipulation (7) est creux.

8. Procédé selon la revendication 7, **caractérisé en ce que** le dispositif de serrage supplémentaire (5) est serré ou desserré à l'aide d'un fluide sous pression amené par la broche d'outil.

9. Machine-outil destinée à la mise en œuvre du procédé selon la revendication 1, la machine-outil comportant un dispositif de serrage de pied d'aube rotatif et un dispositif de serrage de pointe d'aube rotatif (2) pour maintenir une aube de turbine (1), la machine-outil comprenant en outre une broche d'outil destinée à serrer un outil, **caractérisée en ce que** la machine-outil comporte un dispositif de serrage supplémentaire (5) qui comprend deux parties (5.1, 5.2) qui sont équipées chacune d'au moins une mâchoire de serrage (6.1, 6.2), le dispositif de serrage supplémentaire (5) pouvant être fixé au dispositif de serrage de pointe d'aube (2), de préférence à l'aide d'un système de serrage à point zéro.

10. Machine-outil selon la revendication 9, **caractérisée en ce qu'**un boulon de manipulation (7) destiné à saisir la pièce (5.1, 5.2) est prévu au niveau de chaque partie (5.1, 5.2) du dispositif de serrage supplémentaire (5).

11. Machine-outil selon la revendication 9 ou 10, **caractérisée en ce que** le dispositif de serrage supplémentaire (5) est serré ou desserré à l'aide d'un fluide sous pression amené par la broche d'outil.
